# FASCICULE DE BREVET EUROPEEN

(11) **EP 3 171 589 B1**
(45) Date de publication et mention de la délivrance du brevet: **06.06.2018**
(21) Numéro de dépôt: 16196915.9
(22) Date de dépôt: 02.11.2016
(51) Int. Cl.: H04N 5/232

(54) **DRONE MUNI D'UNE CAMERA VIDEO DELIVRANT DES SEQUENCES D'IMAGES CORRIGEES DE L'EFFET WOBBLE**
DROHNE, DIE MIT EINER VIDEOKAMERA AUSGESTATTET IST, DIE WOBBLE-EFFEKT-KORRIGIERTE BILDSEQUENZEN LIEFERT
DRONE EQUIPPED WITH A VIDEO CAMERA SENDING SEQUENCES OF IMAGES CORRECTED FOR THE WOBBLE EFFECT

(30) Priorité: 23.11.2015 FR 1561219
(43) Date de publication de la demande: 24.05.2017
(73) Titulaire: Parrot Drones, 75010 Paris (FR)
(72) Inventeur: ELINE, Pierre, 95400 Arnouville Les Gonesse (FR)
(74) Mandataire: Dupuis-Latour, Dominique

(56) Documents cités:
- US-A1- 2006 140 602
- US-A1- 2013 044 230
- US-A1- 2015 298 822
- CHUNHUA HE ET AL: "A research of the bandwidth of a mode-matching MEMS vibratory gyroscope", NANO/MICRO ENGINEERED AND MOLECULAR SYSTEMS (NEMS), 2012 7TH IEEE INTERNATIONAL CONFERENCE ON, IEEE, 5 mars 2012 (2012-03-05), pages 738-741, XP032179390, DOI: 10.1109/NEMS.2012.6196880 ISBN: 978-1-4673-1122-9

## Description

L'invention concerne le traitement des images numériques captées par une caméra embarquée dans un appareil mobile, en particulier un engin volant motorisé tel qu'un drone.

L'invention s'applique avantageusement aux images recueillies par la caméra frontale d'un drone à voilure tournante tel qu'un quadricoptère. Un exemple typique est l'*AR.Drone 2.0* ou le *Bebop* (marques déposées) de Parrot SA, Paris, France, qui sont des quadricoptères équipés d'une série de capteurs (accéléromètres, gyromètres, altimètre), d'une caméra video frontale captant une image de la scène vers laquelle est dirigé le drone, et d'une caméra de visée verticale captant une image du terrain survolé. Le drone est pourvu de rotors multiples entrainés par des moteurs respectifs commandables de manière différenciée afin de piloter le drone en attitude et en vitesse.

Les EP 2 364 757 A1, EP 2 613 213 A1, EP 2 613 214 A1 ou encore EP 2 933 775 (correspondant au US2015/0298822 A1), tous au nom de Parrot SA, décrivent divers aspects de ces drones.

La caméra video frontale est utilisable pour un pilotage "en mode immersif", c'est-à-dire où l'utilisateur se sert de l'image de la caméra de la même façon que s'il se trouvait lui-même à bord du drone.

Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

Ces images étant destinées à être enregistrées et communiquées, il est souhaitable qu'elles présentent le moins de défauts possible, notamment de défauts provoqués par le comportement du drone, qui peut engendrer des oscillations, déformations et autres artefacts intempestifs de l'image captée par la caméra.

Ces défauts peuvent être acceptables dans une configuration de "pilotage immersif". En revanche, s'il s'agit d'utiliser le drone à la manière d'une caméra video mobile pour capter des séquences qui seront enregistrées et restituées ultérieurement, ces défauts sont extrêmement gênants, de sorte qu'il est souhaitable de les réduire à un minimum.

L'invention vise tout particulièrement l'élimination du défaut connu sous le nom de *wobble,* qui est un effet de flou et de déformation de l'image. Cet effet apparait en présence de vibrations de haute fréquence et de faible amplitude, typiquement les vibrations des moteurs, transmises au support de la caméra et qui ont pour résultat de déformer les lignes droites avec apparition d'ondulations et formation de vagues à l'image. Cet effet, même s'il n'est pas très accentué, est très vite perceptible à l'oeil, de sorte qu'il dégrade rapidement la qualité visuelle de l'image.

Cet artefact particulier est dû au mécanisme de type *rolling shutter* (et non pas *global shutter*) utilisé par les capteurs des caméras telles que celles qui sont embarquées sur les drones, où les lignes constituant l'image ne sont pas acquises en même temps pour tous les pixels de l'image, mais les unes après les autres. Les vibrations se produisant pendant la capture d'une image génèrent de ce fait au sein de l'image des déplacements qui ne sont pas les mêmes d'une ligne à la suivante, d'où l'apparition des ondulations.

La correction ligne par ligne (correction "intra-image") de l'effet *wobble* peut être réalisée en utilisant les mesures des gyromètres, qui délivrent un signal représentatif des rotations instantanées du drone et donc de la caméra dans les trois axes, y compris les variations rapides dues aux vibrations. L'application d'une transformée inverse de la mesure gyrométrique permet de compenser dans une certaine mesure l'effet *wobble*, dès lors que l'attitude du drone peut être acquise de façon précise pour chacune des lignes, et en synchronisme avec le capteur de la caméra.

Une technique de stabilisation d'image de ce type, mise en oeuvre numériquement, est décrite dans le EP 2 933 775 A1 (US2015/0298822 A1) précité auquel on pourra se référer pour de plus amples détails.

Cela étant, comme on l'expliquera plus précisément dans la description détaillée ci-après, cette méthode de compensation du *wobble* par utilisation du signal gyrométrique est susceptible de produire dans certaines conditions des sur-corrections générant de nouveaux artefacts, avec pour conséquence que l'image corrigée se trouve, paradoxalement, plus dégradée que l'image brute obtenue avant toute correction. Ces sur-corrections peuvent notamment faire apparaitre sur l'image des ondulations qui n'existaient pas sur l'image brute, et qui sont particulièrement gênantes si l'on veut notamment capter des séquences video pour les enregistrer et les restituer ultérieurement avec la qualité la plus haute.

L'un des buts de l'invention est de remédier à cet inconvénient en permettant, dès la prise de vue, de disposer d'un signal video, transmis par le drone à l'utilisateur, que ce dernier pourra enregistrer et reproduire dans les meilleures conditions, sans qu'il soit nécessaire de lui appliquer un post-traitement.

Le point de départ de l'invention repose sur la constatation que la technique de stabilisation video décrite notamment dans le EP 2 933 775 A1 (US2015/0298822 A1) précité n'utilise aucune analyse de l'image pour estimer les mouvements du drone à compenser. Les performances de la stabilisation ne dépendent donc pas de la scène captée, mais uniquement de la précision des angles de rotation instantanés du drone estimés par la centrale inertielle de celui-ci.

De plus, dans le domaine des hautes fréquences (typiquement les fréquences de vibration générées par les moteurs), l'estimation des angles de rotation du drone est assurée par une unique série de capteurs, à savoir les gyromètres de la centrale inertielle. Les autres techniques, par exemple l'analyse de l'image délivrée par la caméra verticale, ne peuvent en effet fournir des estimations de rotation qu'à une fréquence inférieure à la fréquence de rafraichissement des images (qui est en pratique de 60 Hz) alors que les vibrations des moteurs, correspondant à la fréquence de rotation des hélices, se situent autour de 120 Hz de fréquence fondamentale. Les gyromètres de la centrale inertielle sont donc les seuls composants capables de mesurer de manière fiable les vibrations subies par la caméra, de sorte que la précision des mesures délivrées par ces capteurs est essentielle pour obtenir une stabilisation performante, puisque la correction du *wobble* repose entièrement sur les mesures délivrées par ceux-ci.

Or, l'un des défauts de ce type de composant est une fonction de transfert irrégulière. Idéalement, la fonction de transfert d'un tel capteur devrait présenter un gain unitaire, constant, dans toute la bande passante de fonctionnement, et une phase variant de manière linéaire sur cette même bande passante.

Mais concrètement, à moins de mettre en oeuvre des composants de très haute précision et donc de coût élevé, ces conditions ne sont pas remplies. En pratique, le profil de la caractéristique de gain présente souvent une bosse, correspondant à une résonance, ainsi qu'un gain progressivement décroissant vers les hautes fréquences. On observe également que la phase est généralement loin d'être linéaire, ce qui constitue une source supplémentaire d'erreur dans l'estimation des angles, avec pour conséquence une dégradation de la stabilisation.

L'article de Chunhua He et al., "A research of the Bandwidth of a Mode-Matching MEMS Vibratory Gyroscope", in 7th IEEE International conference on Nano/Micro Engineered and Molecular Systems (NEMS), March 5, 2012, pp. 738-741 propose d'améliorer la fonction de transfert en modifiant le gyromètre lui-même pour en étendre la bande passante, mais sans fonction compensatrice particulière.

Le principe de base de l'invention consiste, après avoir identifié la fonction de transfert du composant (non-uniformité du gain, non-linéarité de la phase, etc.) de définir un filtre présentant une fonction de transfert complémentaire (gain et phase) et de paramétrer, au sein du drone, un filtrage numérique correspondant qui sera appliqué par le drone sur les échantillons du signal gyrométrique avant application de ces dernières au module de correction de l'image.

Cette technique présente un double avantage, à savoir :
- éliminer la quasi-totalité des sur-corrections introduites par la réponse irrégulière des capteurs gyrométriques, notamment les résonances des gyromètres ; et
- élargir vers le haut la bande passante du système de stabilisation de l'image en amplifiant les hautes fréquences, notamment les fréquences supérieures à la fréquence de rotation des moteurs, qui peuvent contenir des harmoniques gênantes dont il convient de réduire les effets sur l'image, même si ceux-ci sont moins marqués qu'autour des fréquences proches de celles de rotation des hélices du drone.

A cet effet, l'invention propose un drone comprenant, de manière en elle-même connue notamment du EP 2 933 775 A1 (US2015/0298822 A1) précité :
- une caméra comportant un objectif, un capteur numérique sur lequel est formée une image d'une scène, et un mécanisme de type *rolling shutter* de lecture du capteur délivrant en sortie ligne par ligne des données video ;
- une centrale inertielle, comportant un capteur gyrométrique apte à mesurer des variations de l'attitude du drone et à délivrer en sortie un signal gyrométrique représentatif des rotations instantanées du drone par rapport à un repère donné ; et
- un module de traitement d'image, comprenant un module anti-*wobble* recevant en entrée les données video et le signal gyrométrique, et délivrant en sortie des données video traitées et corrigées d'artefacts introduits par des vibrations propres au drone.

De façon caractéristique de l'invention, un tel drone comprend en outre, en entrée du module de traitement d'image :
- un module de filtrage complémentaire, apte à appliquer une fonction de transfert compensatrice prédéterminée au signal gyrométrique en entrée du module anti-*wobble*, ladite fonction de transfert prédéterminée étant une fonction de transfert inverse de la réponse en fréquence dudit capteur gyrométrique de la centrale inertielle.

L'invention a également pour objet un procédé de correction d'un artefact de type *wobble* introduit par des vibrations propres à un drone dans une image numérique recueillie par une capteur numérique de type *rolling shutter* d'une caméra dudit drone, où le drone comprend une centrale inertielle comportant un capteur gyrométrique apte à mesurer des variations de l'attitude du drone et à délivrer en sortie un signal gyrométrique représentatif des rotations instantanées du drone par rapport à un repère donné.

Le procédé de l'invention comprend :
a) dans une étape préalable :
   a1) mesure de la réponse en fréquence dudit capteur gyrométrique de la centrale inertielle ;
   a2) génération d'un filtre numérique présentant une fonction de transfert compensatrice inverse de ladite réponse en fréquence (C1) du capteur gyrométrique ; et
   a3) chargement dudit filtre numérique dans un module de filtrage complémentaire en entrée d'un module anti-*wobble* du drone, et
b) en cours de fonctionnement du drone, de façon continue et en temps réel :
   b1) recueil du signal gyrométrique délivré par la centrale inertielle du drone ;
   b2) application, au signal gyrométrique recueilli à l'étape b1), de la fonction de transfert compensatrice chargée dans le filtre numérique à l'étape a3) ; et
   b3) application, au module anti-*wobble* du drone, du signal gyrométrique filtré à l'étape b2).

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue générale montrant un drone piloté par un appareil de télécommande.
La Figure 2 illustre les artefacts de type *jelly* et *wobble* observables sur l'image d'un damier, avant application de tout filtrage correctif.
Les Figures 3a et 3b illustrent le diagramme de Bode (respectivement gain et phase) typique de la fonction de transfert d'un capteur gyrométrique incorporé à la centrale inertielle d'un drone.
La Figure 4 illustre, sous forme de schéma par blocs, les différents éléments contribuant au mécanisme de stabilisation et de correction de l'image selon l'invention.
Les Figures 5a et 5b illustrent le diagramme de Bode correspondant à la fonction de transfert du filtrage compensateur appliqué conformément aux enseignements de la technique de l'invention en superposition de la fonction de transfert du capteur gyrométrique des Figures 3a et 3b, et illustrent également la fonction de transfert résultant de la compensation de cette dernière par la fonction de transfert de filtrage.

On va maintenant décrire un exemple de réalisation du dispositif de l'invention.

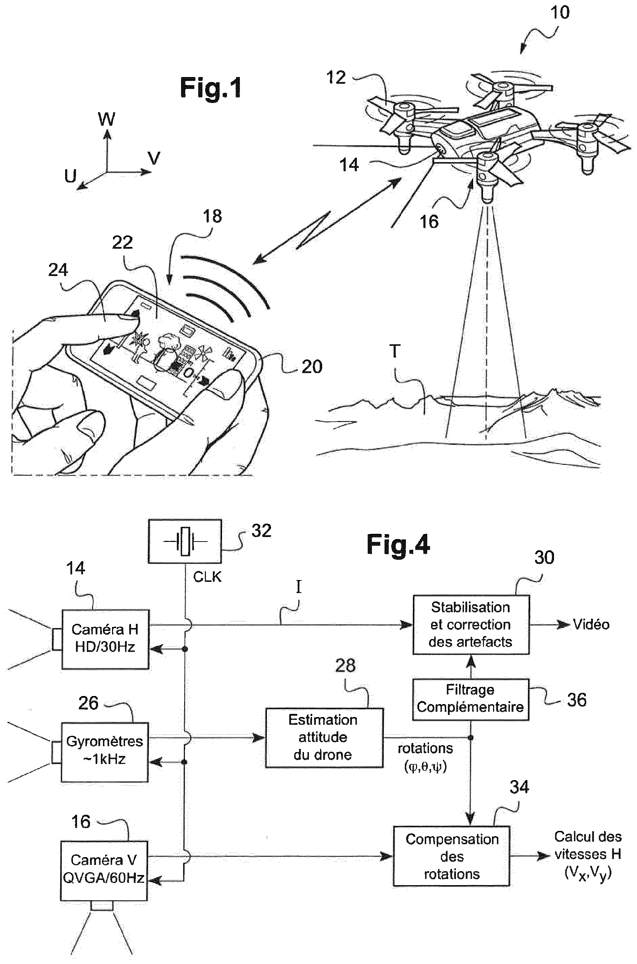

Sur la Figure 1, la référence 10 désigne de façon générale un drone, par exemple un quadricoptère tel que le modèle *Bebop Drone* de Parrot SA, Paris, France. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle se dirige le drone, par exemple une caméra grand-angle haute définition à capteur CMOS 1920 x 1080 pixels avec une fréquence de rafraichissement du flux video de 30 fps (image par seconde). Le drone est également pourvu d'une caméra 16 à visée verticale pointant vers le bas, par exemple une caméra à capteur CMOS de résolution QVGA (320 x 240 pixels) avec une fréquence de rafraichissement du flux video de 60 fps et un angle de champ de 64°. Cette caméra 16 capte des images successives du terrain survolé T qui servent notamment à évaluer la vitesse du drone par rapport au sol.

Le drone est également muni de capteurs inertiels (accéléromètres et gyromètres) permettent de mesurer avec une certaine précision les vitesses angulaires et les angles d'attitude du drone, c'est-à-dire les angles d'Euler (tangage *ϕ*, roulis *θ* et lacet *ψ*) décrivant l'inclinaison du drone par rapport à un plan horizontal d'un repère terrestre fixe UVW, étant entendu que les deux composantes longitudinale et transversale de la vitesse horizontale sont intimement liées à l'inclinaison suivant les deux axes respectifs de tangage et de roulis.

Le drone 10 est piloté par un appareil de télécommande distant 18 tel qu'un téléphone ou tablette multimedia à écran tactile et accéléromètres intégrés, par exemple un *smartphone* de type *iPhone* (marque déposée) ou autre, ou une tablette de type *iPad* (marque déposée) ou autre. Il s'agit d'un appareil standard, non modifié si ce n'est le chargement d'un logiciel applicatif spécifique tel que l'application mobile *AR Free Flight* (marque déposée) pour contrôler le pilotage du drone 10 et la visualisation des images prises par la caméra frontale embarquée 14. L'appareil 18 comprend un corps 20 et un écran tactile 22 affichant l'image de la scène captée par la caméra frontale 14, avec en superposition un certain nombre de symboles permettant l'activation de commandes de pilotage (montée/descente, etc.) par simple contact d'un doigt 24 de l'utilisateur sur les symboles affichés à l'écran. L'appareil 18 est également pourvu de capteurs d'inclinaison permettant de contrôler l'attitude du drone en imprimant à l'appareil des inclinaisons correspondantes selon des axes de roulis et de tangage pour le faire avancer ou reculer. Les actions de l'utilisateur sont interprétées par le logiciel applicatif spécifique, qui les transforme en signaux de commande à destination du drone.

Comme on l'a exposé en introduction, l'image haute définition délivrée par la caméra frontale 14 est particulièrement sujette aux défauts de flou et de déformation de l'image connus sous le nom de *jelly* et *wobble* produisant des effets qui, même s'il ne sont pas très accentués, sont très perceptibles à l'oeil et dégradent rapidement la qualité visuelle de l'image.

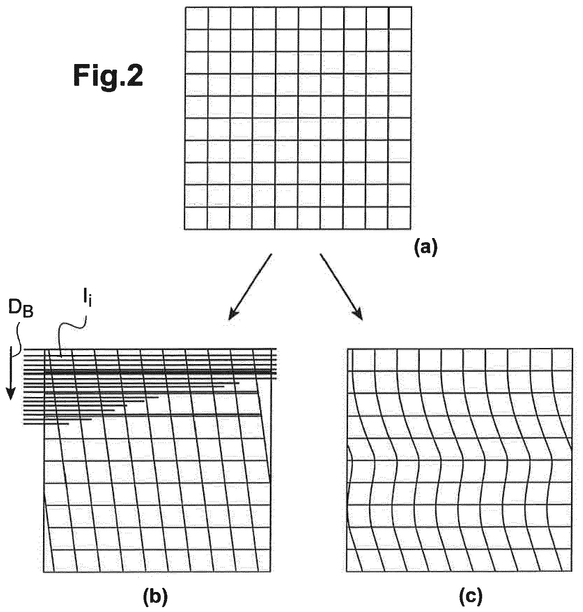

Sur la Figure 2 on a illustré en (b) les déformations de type *jelly* et en (c) les déformations de type *wobble* observables sur l'image d'un damier représenté en (a). Ces artefacts sont propres à un capteur de type *rolling shutter* (et non pas *global shutter*), où les lignes constituant l'image ne sont pas acquises en même temps pour tous les pixels de l'image, mais successivement ligne après ligne (ou groupe de lignes après groupe de lignes), au fur et à mesure du balayage du capteur dans la direction *D_{B}*, perpendiculaire aux lignes *lᵢ*. Les mouvements du drone et les vibrations se produisant pendant la durée de la capture d'une image génèrent au sein de cette image des déplacements qui ne seront pas les mêmes d'une ligne à la suivante.

L'effet *jelly*, visible en (b), apparait en présence de mouvements de caméra de forte amplitude mais de relativement basse fréquence, par exemple en présence de rotations importantes du drone : lorsque celui-ci tourne, entre le début et la fin de l'exploration du capteur par l'obturateur *rolling shutter,* l'image se sera déplacée de plusieurs pixels (dans l'exemple de la figure, d'environ un carreau du damier entre le haut et le bas de l'image).

Ce phénomène peut être pallié en associant à chaque ligne *lᵢ* de l'image un décalage approprié au fur et à mesure du balayage *D_{B}* du capteur, cette correction ligne par ligne permettant d'annuler l'artefact *jelly* introduit par la rotation rapide du drone.

L'autre type d'artefact, dit "effet *wobble*", illustré en (c), est celui concerné par la présente invention.

À la différence de l'effet *jelly* qui est un effet de basse fréquence et de grande amplitude causé par les rotations du drone pour se déplacer, l'effet *wobble* est principalement causé par les vibrations du moteur, qui introduisent des oscillations de haute fréquence (typiquement de l'ordre de 120 Hz) et de faible amplitude. Ces vibrations sont transmises au support de la caméra, et ont pour effet de déformer les lignes droites avec apparition d'ondulations et formation de vagues à l'image.

L'effet *wobble* est partiellement corrigé par un amortissement mécanique approprié du support de la caméra permettant de filtrer les vibrations du moteur, comme décrit par exemple dans le WO 2011/058255 A1 (Parrot SA).

Ce filtrage mécanique n'est, en pratique, pas suffisant et les résidus de l'effet *wobble* doivent être éliminés, ce qui peut être réalisé en utilisant des mesures délivrées par la centrale inertielle du drone, représentatives des rotations instantanées du drone provoquées par les vibrations, et en appliquant des corrections appropriées en fonction de ces mesures. Les gyromètres de la centrale inertielle permettent en effet de disposer d'une indication précise de l'attitude instantanée du drone pour chacune des lignes, autorisant une correction "intra-image", ligne par ligne, avec recalage des lignes successives les unes par rapport aux autres pour délivrer une image la plus proche possible de la scène captée, à savoir le damier (a) dans le présent exemple.

Le EP 2 933 775 A1 précité décrit une telle technique de correction du *wobble* utilisant les signaux délivrés par les gyromètres de la centrale inertielle du drone.

En pratique, on se heurte toutefois à certaines limites de cette correction anti-*wobble* par application d'un signal gyrométrique inverse.

En effet, on constate que l'anti-*wobble* a généralement tendance à sur-corriger les vibrations de l'image dans des plages de fréquence proches de celles de la fréquence nominale de rotation des hélices (c'est-à-dire de la fréquence fondamentale des vibrations à corriger), et à sous-corriger les fréquences plus élevées, au-delà de cette fréquence.

Une analyse de la réponse du capteur gyrométrique par les inventeurs a permis de révéler la source de cette anomalie, qui réside essentiellement dans la caractéristique imparfaite de la fonction de transfert (réponse en fréquence) de ce capteur.

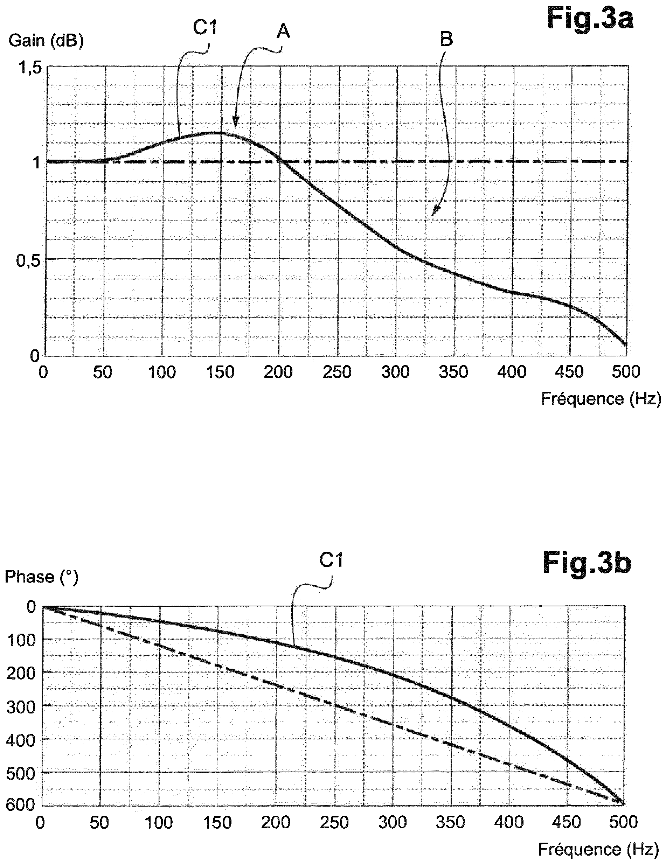

On se réfèrera aux Figures 3a et 3b, qui représentent le diagramme de Bode (gain et phase) typique de la réponse d'un capteur gyrométrique utilisé dans une centrale inertielle d'un drone grand public, mettant en oeuvre des composants de coût réduit.

Une fonction de transfert idéale présenterait dans toute la bande passante concernée un gain unitaire et une phase linéaire.

Or, comme on peut le constater sur les Figures 3a et 3b, tel n'est pas le cas.

Dans l'exemple illustré on remarque en A sur la caractéristique de gain (Figure 3a) une résonance importante (gain de l'ordre de 1,15) à une fréquence de l'ordre de 140 Hz, très proche de la fréquence nominale de rotation des hélices du drone, source de *wobble* à l'image. On remarque également que la caractéristique de phase (Figure 3b) est loin d'être linéaire, ce qui introduit également une source d'erreur dans l'estimation des angles, avec pour conséquence une dégradation de la stabilisation de l'image. De plus, pour les fréquences au-delà d'environ 200 Hz, on constate en B une chute progressive du gain.

Ces défauts ont pour résultat de produire une sur-correction du *wobble* pour les fréquences autour de 140 Hz (fréquences qui sont les plus critiques car elles correspondent à la fréquence fondamentale des vibrations à filtrer), et une sous-correction au-delà de 200 Hz : dans le premier cas, la correction introduit dans l'image des ondulations qui n'y figuraient pas initialement, tandis que dans le second cas elle ne filtre pas suffisamment les ondulations qui s'y trouvent.

Le but de l'invention est de proposer une technique permettant de remédier à cet inconvénient.

La Figure 4 illustre, sous forme de schéma par blocs fonctionnels, les différents modules participant à la mise en oeuvre de cette invention, pour la correction complète de l'effet *wobble* sur le signal d'image I délivré par une caméra 14 comprenant un capteur de type *rolling shutter* telle que la caméra haute définition à visée frontale du drone 10 de la Figure 1.

On notera que, bien que ces schémas soient présentés sous forme de circuits ou modules interconnectés, la mise en oeuvre des différentes fonctions est essentiellement logicielle, cette représentation n'ayant qu'un caractère illustratif.

La caméra 14, mécaniquement liée au corps du drone, est sujette à des déplacements angulaires de grande amplitude et de basse fréquence (déplacements du drone) ainsi que de faible amplitude et de haute fréquence (vibrations des moteurs). Ces mouvements subis par la caméra sont mesurés par une centrale inertielle 26 liée au corps du drone et donc à la caméra, et munie notamment de capteurs gyrométriques. Les mesures de ces capteurs sont appliquées à un module 28 d'estimation de l'attitude du drone délivrant des indications d'angle de tangage *ϕ*, d'angle de roulis *θ* et d'angle de lacet *ψ* décrivant l'inclinaison instantanée du drone dans les trois dimensions par rapport à un repère terrestre fixe (angles d'Euler). Ces données d'angles de rotation sont appliquées à un module 30 de de correction numérique des données d'image *I* assurant diverses fonctions telles que fenêtrage, stabilisation de l'image, extraction et redressement d'une zone utile, correction des distorsions géométriques introduites par l'objectif de la caméra, etc. Le module 30 délivre en sortie un signal video utile qui est transmis à l'utilisateur distant pour affichage sur l'écran de son appareil de télécommande et enregistrement éventuel pour une diffusion ultérieure.

Le module 30 assure également la correction des artefacts de type *jelly* et *wobble*, en particulier la compensation de l'effet *wobble* (décrit plus haut en référence à la Figure 2) par application d'une technique telle que celle décrite dans le EP 2 933 775 A1 précité. Essentiellement, il s'agit d'appliquer au signal d'image une transformée inverse de la mesure gyrométrique de manière à recaler les lignes successives les unes par rapport aux autres en fonction des variations de l'attitude instantanée du drone d'une ligne à l'autre.

La caméra 14 et la centrale inertielle 26 sont pilotées par un module d'horloge commun 32, les fréquences de fonctionnement respectives de la centrale inertielle et de la caméra étant des sous-multiples de la fréquence CLK de cette horloge 32. L'horloge 32 pilote également la caméra verticale 16, dont le signal de sortie est appliqué à un module 34 assurant une compensation des rotations d'une image à la suivante en fonction des estimées des rotations calculées par le module 28, avant de calculer les vitesses horizontales *Vₓ* et *V_{y}* au moyen de divers algorithmes appropriés opérant par comparaison du déplacement apparent entre deux images consécutives, recalées en rotation, du terrain survolé par le drone.

De façon caractéristique, l'invention prévoit d'intercaler entre le module 28 d'estimation des angles du drone et le module de correction numérique de l'image 30 un filtre complémentaire 36 dont la fonction de transfert propre compensera la fonction de transfert imparfaite des capteurs gyrométriques de la centrale inertielle 26.

Le filtrage est un filtrage prédéterminé, dont la fonction de transfert a été déterminée après avoir identifié au préalable (par exemple en sortie d'usine) la fonction de transfert réelle du composant gyrométrique utilisé par le drone.

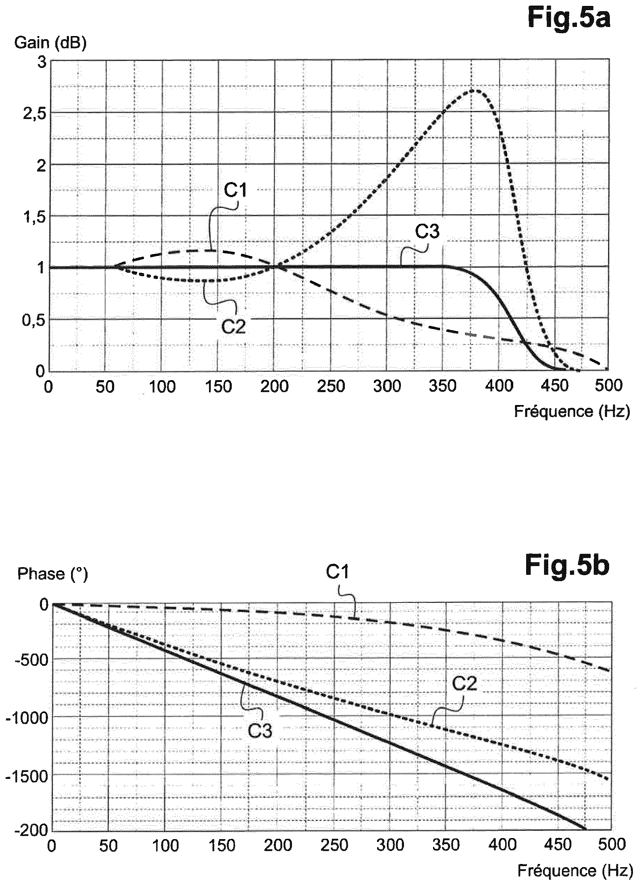

Les Figures 5a et 5b illustrent le diagramme de Bode (gain et phase en fonction de la fréquence) correspondant à la fonction de transfert C2 du filtrage compensateur appliqué conformément aux enseignements de la technique de l'invention. En C1, on a représenté en superposition la fonction de transfert effective du composant, qui est celle qui avait été représentée et décrite en référence aux Figures 3a et 3b.

Un filtre complémentaire, correspondant à la fonction de transfert C2, est généré à partir de la fonction C1, et paramétré dans le module de filtrage 36 de manière à appliquer ce filtrage complémentaire sur les échantillons successifs des valeurs instantanées reflétant les rotations du drone dans les trois axes.

La caractéristique C3 des Figures 5a et 5b illustre la réponse totale, résultant de la combinaison de la réponse C1 du composant gyrométrique et du filtrage compensateur C2. On peut constate en particulier que l'application du filtrage compensateur permet :
- de supprimer la bosse de résonance aux alentours de la fréquence critique de 140 Hz, proche de la fréquence nominale de rotation des hélices générant les vibrations à filtrer ;
- d'élargir la bande passante vers les hautes fréquences jusqu'à 350 Hz environ, ce qui permet notamment de filtrer la première harmonique de la fréquence des vibrations ; et
- de linéariser la réponse en phase, avec une amélioration corrélative de la stabilisation de l'image.

## Revendications

1. Un drone (10), comprenant :
- une caméra (14) comportant un objectif, un capteur numérique sur lequel est formée une image d'une scène, et un mécanisme de type *rolling shutter* de lecture du capteur délivrant en sortie ligne par ligne des données video ;
- une centrale inertielle (26), comportant un capteur gyrométrique apte à mesurer des variations de l'attitude du drone et à délivrer en sortie un signal gyrométrique représentatif des rotations instantanées (*ϕ*, *θ*, *ψ*) du drone par rapport à un repère donné (UVW) ; et
- un module de traitement d'image (30), comprenant un module anti-*wobble* recevant en entrée les données video (*I*) et le signal gyrométrique, et délivrant en sortie des données video traitées et corrigées d'artefacts introduits par des vibrations propres au drone,
**caractérisé en ce qu'**il comprend en outre, en entrée du module de traitement d'image :
- un module (36) de filtrage complémentaire, apte à appliquer une fonction de transfert compensatrice prédéterminée (C2) au signal gyrométrique en entrée du module anti-*wobble*, ladite fonction de transfert prédéterminée (C2) étant une fonction de transfert inverse de la réponse en fréquence (C1) dudit capteur gyrométrique de la centrale inertielle.

2. Un procédé de correction d'un artefact de type *wobble* introduit par des vibrations propres à un drone (10) dans une image numérique (*I*) recueillie par une capteur numérique de type *rolling shutter* d'une caméra (14) dudit drone,
où le drone comprend une centrale inertielle (26) comportant un capteur gyrométrique apte à mesurer des variations de l'attitude du drone et à délivrer en sortie un signal gyrométrique représentatif des rotations instantanées (*ϕ*, *θ*, *ψ*) du drone par rapport à un repère donné (UVW), ce procédé étant **caractérisé en ce qu'**il comprend :
a) dans une étape préalable :
a1) mesure de la réponse en fréquence (C1) dudit capteur gyrométrique de la centrale inertielle ;
a2) génération d'un filtre numérique présentant une fonction de transfert compensatrice (C2) inverse de ladite réponse en fréquence (C1) du capteur gyrométrique ; et
a3) chargement dudit filtre numérique dans un module de filtrage complémentaire (36) en entrée d'un module anti-*wobble* (30) du drone, et
b) en cours de fonctionnement du drone, de façon continue et en temps réel :
b1) recueil du signal gyrométrique délivré par la centrale inertielle (26) du drone ;
b2) application, au signal gyrométrique recueilli à l'étape b1), de la fonction de transfert compensatrice (C2) chargée dans le filtre numérique (36) à l'étape a3) ; et
b3) application, au module anti-*wobble* (30) du drone, du signal gyrométrique filtré à l'étape b2).

## Patentansprüche

1. Drohne (10), umfassend:
- eine Kamera (14) mit einem Objektiv, einem digitalen Sensor, auf dem ein Bild einer Szene gebildet wird, und einem Mechanismus des Rolling-Shutter-Typs zum Auslesen des Sensors, der am Ausgang zeilenweise Videodaten ausgibt;
- eine inertiale Zentrale (26) mit einem Drehbewegungsmesssensor, der in der Lage ist, Veränderungen der Fluglage der Drohne zu messen und am Ausgang ein Drehbewegungsmesssignal auszugeben, das für die kurzzeitigen Drehungen (ϕ, θ, ψ) der Drohne relativ zu einem bestimmten Bezugssystem (UVW) repräsentativ ist; und
- ein Bildverarbeitungsmodul (30), das ein Anti-Taumel-Modul umfasst, das am Eingang die Videodaten (I) und das Drehbewegungsmesssignal empfängt und am Ausgang verarbeitete und um Artefakte korrigierte Videodateien ausgibt, die durch der Drohne eigene Vibrationen eingebracht werden,
**dadurch gekennzeichnet, dass** sie ferner, am Eingang des Bildverarbeitungsmoduls,
- ein zusätzliches Filtermodul (36) umfasst, das in der Lage ist, auf das Drehbewegungsmesssignal am Eingang des Anti-Taumel-Moduls eine vorbestimmte Kompensations-Transferfunktion (C2) anzuwenden, wobei die vorbestimmte Transferfunktion (C2) eine umgekehrte Transferfunktion des Frequenzgangs (C1) des Drehbewegungsmesssensors der inertialen Zentrale ist.

2. Verfahren zur Korrektur eines Artefakts vom Taumeltyp, das durch einer Drohne (10) eigene Vibrationen in ein digitales Bild (I) eingebracht wird, das von einem digitalen Sensor des Rolling-Shutter-Typs einer Kamera (14) der Drohne eingefangen wird,
bei dem die Drohne eine inertiale Zentrale (26) umfasst mit einem Drehbewegungsmesssensor, der in der Lage ist, Veränderungen der Fluglage der Drohne zu messen und am Ausgang ein Drehbewegungsmesssignal auszugeben, das für die kurzzeitigen Drehungen (ϕ, θ, ψ) der Drohne relativ zu einem bestimmten Bezugssystem (UVW) repräsentativ ist, wobei das Verfahren **dadurch gekennzeichnet ist, dass** es Folgendes umfasst:
a) in einem vorherigen Schritt:
a1) Messen des Frequenzgangs (C1) des Drehbewegungsmesssensors der inertialen Zentrale;
a2) Generieren eines digitalen Filters, der eine umgekehrte Kompensations-Transferfunktion (C2) des Frequenzgangs (C1) des Drehbewegungsmesssensors ist; und
a3) Laden des digitalen Filters in ein zusätzliches Filtermodul (36) am Eingang eines Anti-Taumel-Moduls (30) der Drohne, und
b) bei laufendem Betrieb der Drohne kontinuierlich und in Echtzeit:
b1) Einfangen des von der inertialen Zentrale (26) der Drohne ausgegebenen Drehbewegungsmesssignals;
b2) Anwenden, auf das in Schritt b1) eingefangene Drehbewegungsmesssignal, der in Schritt a3) in den digitalen Filter (36) geladenen Kompensations-Transferfunktion (C2); und
b3) Anwenden, auf das Anti-Taumel-Modul (30) der Drohne, des in Schritt b2) gefilterten Drehbewegungsmesssignals.

## Claims

1. A drone (10), comprising:
- a camera (14) including a lens, a digital sensor onto which is formed an image of a scene, and a mechanism of the rolling-shutter type for reading the sensor, delivering video data as an output, line-by-line;
- an inertial unit (26), including a gyrometer sensor adapted to measure variations of the drone attitude and to deliver as an output a gyrometric signal representative of the instantaneous rotations (*ϕ*, *θ, ψ*) of the drone with respect to a given reference system (UVW); and
- an image processing module (30), comprising an anti-wobble module receiving as an input the video data (*I*) and the gyrometric signal, and delivering as an output video data that are processed and corrected for artifacts introduced by vibrations originating from the drone,
**characterized in that** it further includes, at the input of the image processing module:
- a complementary filtering module (36), adapted to apply a predetermined compensating transfer function (C2) to the gyrometric signal at the input of the anti-wobble module, said predetermined transfer function (C2) being a transfer function that is the inverse of the frequency response (C1) of said gyrometer sensor of the inertial unit.

2. A method for correcting an artifact of the wobble type introduced by vibrations originating from a drone (10) in a digital image (*I*) collected by a digital sensor of the rolling shutter type of a camera (14) of said drone,
wherein the drone comprises an inertial unit (26) including a gyrometer sensor adapted to measure variations of the drone attitude and to deliver as an output a gyrometric signal representative of the instantaneous rotations (*ϕ*, *θ*, *ψ*) of the drone with respect to a given reference system (UVW),
said method being **characterized in that** it includes:
a) in a preliminary step:
a1) measuring the frequency response (C1) of said gyrometer sensor of the inertial unit;
a2) generating a digital filter having a compensating transfer function (C2) that is the inverse of said frequency response (C1) of the gyrometer sensor; and
a3) loading said digital filter into a complementary filtering module (36) at the input of an anti-wobble module (30) of the drone, and
b) during the operation of the drone, continuously and in real time:
b1) collecting the gyrometric signal delivered by the inertial unit (26) of the drone;
b2) applying, to the gyrometric signal collected at step b1), the compensating transfer function (C2) loaded in the digital filter (36) at step a3); and
b3) applying, to the anti-wobble module (30) of the drone, the gyrometric signal filtered at step b2).
